(19) **Europäisches Patentamt / European Patent Office / Office européen des brevets**

(11) **EP 1 227 140 B1**

(12) **EUROPEAN PATENT SPECIFICATION**

(45) Date of publication and mention of the grant of the patent:
**01.08.2007  Bulletin 2007/31**

(51) Int Cl.:
*C10C 3/00* (2006.01)    *C08L 95/00* (2006.01)
*C08K 5/3415* (2006.01)

(21) Application number: **02425016.9**

(22) Date of filing: **18.01.2002**

(54) **Process for obtaining a bitumen of improved aging resistence**

Verfahren zur Herstellung von Bitumen mit verbesserter Alterungsbeständigkeit

Procédé de préparation de bitumen d'une résistance de vieillissement améliorée

(84) Designated Contracting States:
**AT BE CH CY DE DK ES FI FR GB GR IE IT LI LU MC NL PT SE TR**
Designated Extension States:
**LT**

(30) Priority: **26.01.2001  IT  RM010040**

(43) Date of publication of application:
**31.07.2002  Bulletin 2002/31**

(73) Proprietor: **CHIMEC S.P.A.**
**I-00144 Roma RM (IT)**

(72) Inventors:
• **Zanotti, Andrea**
  **00042 Anzio, RM (IT)**
• **Buccolini, Marco**
  **62032 Camerino, MC (IT)**

(74) Representative: **Bazzichelli, Alfredo et al**
**c/o Società Italiana Brevetti S.p.A.**
**Piazza di Pietra, 39**
**00186 Roma (IT)**

(56) References cited:
**EP-A- 0 321 424        EP-A- 0 818 524**

• **GIAVARINI CARLO: "STABILITY OF BITUMENS PRODUCED BY THERMAL PROCESSES" FUEL, vol. 60, no. 5, May 1981 (1981-05), pages 401-404,**

Remarks:
The file contains technical information submitted after the application was filed and not included in this specification

**Description**

The present invention relates to the use of a chemical additive which, introduced during the production process of bitumen, improves the aging resistance of the latter obtaining a finished bitumen quality remarkably superior to that of the normal productions, both from Visbreaking and from straight-run distillation.

Bitumen is defined as a generic class of solid, semisolid or viscous cementing substances, of a dark brown to black color, mainly consisting of heavy hydrocarbons soluble in carbon sulfide, like asphalt, tar, pitch, and asphaltites.

Bitumen is used in the field of materials for roads and pavings, per se as a stabilizing or sealing coating, or in a mixture with asphalt and/or incoherent mineral as aggregate for road surfaces.

The quality of a bitumen for road applications is based on its aging resistance, intended as resistance to the change of its basic parameters owing to oxidation and thermal degradation.

BACKGROUND OF THE INVENTION

Nowadays, bitumen is produced starting from suitably selected crude oils, by various distillation or thermal cracking techniques. Bitumens directly deriving from the straight-run distillation of the crude (topping) or from the subsequent vacuum distillation, are usually referred to as 'straight-run bitumens'.

In the past, most of the world production of bitumen was doubtless filled by straight-run bitumens, which, deriving from treatments of sole distillation, hence at low temperatures, have optimum aging resistance features.

Recently, the use of a form of thermal cracking called Visbreaking (VSB) has gained importance. It provides a significant advantage in the production economy to refineries, in particular to those following several production schemes widely adopted at an European level. However, it is well known that the major drawback of this type of production lies in the destabilization of the resulting residue, which often, after a further vacuum distillation step, has to be used for bitumen production.

In order to attain a greater yield in middle distillates, Visbreaking is often effected at the utmost possible severity. However, upon obtaining a residue having too low a stability the process severity has to be mitigated due to fouling problems, in particular deposition of asphaltenes and coke in the apparatuses.

For 'stability' of a residue, with particular reference to that obtained in the Visbreaking, the property of this fluid is meant to remain as a stable solution in time, without exhibiting problems of precipitation of the asphaltenic particles dispersed therein. A residue lacks stability when its aromatic component, owing to dehydrogenation and molecular enlargement reactions, fails to effectively keep the aromatic macroparticles, called asphaltenes, dispersed. On the other hand, asphaltenes increase in quantity with the increase of the thermal stress to which the process fluid is subjected upon Visbreaking.

Therefore, when Visbreaking is exasperated in order to attain a high yield of useful refinery products, care being taken with the fouling caused by the obtained residue, the quality of the bitumen thus produced is unacceptably low.

It has experimentally been observed (Giavarini C. - Rome University - "Visbreaker bitumens" -Euroasphalt 1988) that there is a remarkable difference in the resistance to oxidation and to heating between the straight-run bitumens and the Visbreaking bitumens. This is probably due to the thermal stress to which the residue is subjected upon Visbreaking, all the more so if this operation is managed at the utmost possible severity.

Therefore, to the actual state of the art, the severity at which a Visbreaking process is managed affects the aging resistance, included the stability of a bitumen to storage, and above all the bitumen performation upon being used in road applications, when it is liable to repeated heating steps, as required for the admixture to aggregates and for the laying thereof.

SUMMARY OF THE INVENTION

The present invention aims at solving the problem of obtaining from a Visbreaking plant a bitumen of a quality comparable to that of a straight-run bitumen.

Hence, object of the present invention is to produce a bitumen of improved aging resistance, obtained through vacuum distillation of the residue of a petrochemical thermal cracking plant and, more particularly, a Visbreaking plant.

This object is attained by a process for obtaining a bitumen of improved aging resistance through vacuum distillation of the residue product of a petrochemical refining plant, characterized by the step of introducing in the hydrocarbon feedstock under treatment in said plant, an amount in the range from 10 to 10000 ppm calculated with respect to the weight of the hydrocarbon feedstock introduced in the plant, of an additive composition comprising:

5 to 80% by weight of at least one alkylsuccinimide having a nitrogen content 1 to 8% and a total basicity value of 20 to 200 mg KOH/g and eventually containing atoms of an element selected from the class consisting of boron and phosphor,

0 to 90% by weight of phenol antioxidants and
solvents in a proportion from 5 to 95% by weight, sufficient to form a homogeneous end product,

***wherein the bitumen features expressing the improved aging resistance are the softening temperature, the penetration value, the viscosity or the weight.***

It has been found that this additive proved surprisingly effective in increasing the aging resistance of the bitumen produced by said plants.

In pratice, it allows to produce, the severity conditions of the operation management being the same, a bitumen which is more resistant to oxidation and to thermal degradation.

DESCRIPTION OF THE PRIOR ART

Alkylsuccinimides having a nitrogen content 1 to 8% and a total basicity value of 20 to 200 mg KOH/g and eventually containing atoms of an element selected from the class consisting of boron and phosphor, are already known and disclosed in DE-OS No.2053800, British patents Nos. 960493 and 1186659 and in US patent No. 3172892. In the abovementioned patents, however, there is no reference to the use of such substances for improving the aging resistance in bitumen.

In EP-A-321 424 of the same Applicant, a composition analogous to that of the additive according to the present invention, comprising the abovementioned alkylsuccinimides, is disclosed. The use of the additive in EP-A-321 424 aims at obtaining in a Visbreaking plant an increased yield of middle distillates, residue stability being the same. As abovementioned, the stability of a Visbreaking (or other thermal conversion plant) residue is a parameter which does not share anything with the aging resistance of the bitumen. The stability of a residue is a desirable feature for the use of the same residue in further blending steps and in further distillation to obtain fuel oils not exhibiting a marked filter clogging tendency. The phenomenon of residue stability is related to preventing precipitation of asphaltenic particles dispersed in an aliphatic environment. In EP-A-321 424 the problem is not so much the residue stability per se, but the improved stability obtained with the additive, which enables a higher operating temperature, and therefore, residue condition being the same, an increased yield to be obtained. In fact, residue stability is a limiting factor with respect to the desirability of operating at higher temperatures. I.e., EP-A-321 424 teaches how to operate at a higher temperature, i.e., how to manage a Visbreaking process under more severe conditions, residue stability being the same.

On the contrary, the present invention does not teach how to increase plant yield, rather how to obtain a product of superior quality, made of bitumen. I.e., in EP-A-321 424 the idea of solution is to increase the temperature, whereas in the present invention an increase in temperature would be unacceptable in that a product (bitumen) would be obtained being degraded by a severe thermal treatment, whereas the object was to obtain an improved aging resistance.

I.e., in EP-A-321 424 the solution to the problem of obtaining a yield increase is to manage the operation at a PV (Peptization Value) as low as possible (at a higher temperature). Conversely, this would be unacceptable in the present invention, wherein the indication to run at a high temperature would surely lead to obtain an inferior bitumen.

DETAILED DESCRIPTION OF THE INVENTION

Alkylsuccinimides suitable in the scope of the present invention are those having a nitrogen content 1% to 8% and a total basicity value of 20 to 200 mg KOH/g and eventually containing atoms of boron and phosphor. More particularly, the nitrogen content may be in the range from 2.5 to 3.5% by weight and the total basicity value from 40 to 60 mg KOH/g.

Among phenols, sterically hindered phenols, cathecol derivatives and bisphenols may be mentioned. In particular, preferred cathecol derivatives are 4-tert-butylcathecol and catechol. Among phenols, preferred are those wherein at least one tert-butyl substituent group lies in an ortho position with respect to the OH of the phenolic group. Representatives thereof are 2,6-di-tert-butylphenol, 2,6-di-tert-butyl-4-methylphenol and 2,4-dimethyl-6-tert-butylphenol (methyl tert-butylxylenol).

As bisphenols the following may be mentioned: 4,4'-methylene-bis(2,6-di-tert-butylphenol), 4,4'-thiobis(6-tert-butyl methacresol), 2,2'-methylene-bis(4-methyl-6-nonylphenol), 2,2'-methylene-bis(4-methyl-6-tert-butylphenol).

In the selection of the active ingredients, all three phenol typologies may be used, concomitantly or alternatively.

The solvents to be used in the process of the present invention may be all those apt to form a homogeneous end product, in particular mixtures of xylenes, ethylbenzenes, trimethylbenzenes and diethylbenzenes, as well as hydrocarbon cuts of a boiling point range from 130 to 280°C.

The proportions of the three active ingredients of the additive may comprise:

5 to 95% by weight of solvent,
5 to 80% by weight of alkenylsuccinimides, preferably 20 to 50%,
0 to 90% by weight of phenols, preferably 5 to 40%.

TEST RESULTS

In order to experimentally reproduce chemico-physical changes in the bitumen structure alike those occurring due to the laying and to the thermal excursions during the years of service, bitumen quality is measured with standard methods, mostly imported from ASTM ones.

Recently, at the European Committee in charge of the standardization of road bitumen specifications, it has been established that bitumen quality should be measured with standard methods.

In particular, the oxidation and heating resistance of a bitumen is determined measuring several chemico-physical features thereof prior to an aging test, and then repeating the same measurings after the test. The variation in these features expresses the ability of bitumen to resist the unavoidable oxidation and thermal degradation phenomena.

By 'aging resistance', the property of a bitumen of resisting modification of its chemico-physical features, when subjected to a thermal and oxidative process reproducing the stresses to which the bitumen will actually be liable to at road laying, is meant.

The aging test preselected by the EC was the RTFOT (ASTM D 2872/85), whereas the chemico-physical features of which the change is measured owing to the effecting of the aging are the Softening point, or Ring and Ball point, the penetration and the weight variation. The latter, according to the ECS specifications, should not exceed the 0.8% (usually, owing to RTFOT a bitumen increases in weight due to oxygen fixing): is usually a rather easy property to attain, even by Visbreaking bitumens.

The ECS standards, set by the same body (European Committee for Standardization) generally achieve the status of European Standards, recognizable by the designation "EN". The ECS also publishes testing standards.

The ECS specifications indicated in the present description are values preset by said Body for some of the bitumen features (penetration, softening, residual penetration, for example). These specifications are determined by E.N. Standard Methods, according to the En Standard 12591/1999.

The Softening point (or Ring and Ball -R & B - Standard Method EP 58/86) is a temperature peculiar of every bitumen, and it is expressed as the temperature whereat a bitumen reaches a certain degree of softening under given test conditions. In particular, the temperature whereat a small bitumen sample, machined inside a ring, softens enough to let a steel ball therethrough. The increase of this peculiar temperature, after RTFOT aging, is one of the quantities measuring the bitumen resistance to thermal and oxidative degradation. In fact, the value of the softening point of an aged bitumen should not be less than 45°C. Moreover, specifically for Italy, there is a $\Delta T$ parameter to be observed: i.e., after aging the softening temperature cannot increase of more than 11°C.

Penetration (Standard method IP 49186 or ASTM D 5/86) is the measure (in dmm) of how much a needle, pushed by a standard weight and for a fixed time (5 sec), penetrates through a bitumen ingot set at room temperature (25°C). Penetration is a measure of the consistency of a bituminous material. Higher penetration values indicate a softer consistency.

Residual Penetration is the penetration rate of the bitumen which is left over after aging. In practice, for a bitumen of 80 dmm penetration, the former will be 50% if, after RTFOT aging, the penetration of the aged bitumen will be of 40 dmm.

Evidently, also this parameter is an index of the aging resistance of a bitumen: ECS specifications have been focused on this quantity, and the most important specification stresses just that the Residual Penetration of a RTFOT-aged bitumen may not be lower than 46%.

Finally, the viscosity of a bitumen (measured by Brookfield rotational or capillary viscosimeter) is a chemico-physical parameter which is highly important to determine the immutability of a bitumen in order to assess the uniform quality thereof: usually it is measured at 60°C and at 135°C. The ratio between the post-RTFOT viscosity of a bitumen and that measured pre-RTFOT is called Aging Index and (though it has not been considered by the ECS as a specification) it also represents an important parameter for the assessment of a bitumen aging. According to a long-settled good practice, for road bitumens of 70/100 penetration it is advisable that such ratio do not exceed the value of 5 in order to have a bitumen with a sufficient aging behaviour. I.e., the viscosity of the aged bitumen should not exceed that of the newly-laid bitumen by more than 5 times.

Therefore, upon having been subjected to a RTFOT aging process, a bitumen sample exhibits a higher softening point (it softens later), a lower penetration (it is firmer) and a higher viscosity (it is less fluid). In order to be considered as a good-quality bitumen, the $\Delta T$ should not exceed 10°C, the residual penetration should not be lower than 46% and the Aging Index should not be greater than 5.

The examples reported hereinafter clearly demonstrate that for bitumens of a residual penetration which is slightly lower than 46% (ECS specifications), a softening decrease of slightly more than 11°C (ECS specifications) and A.I. (Aging Index) slightly greater than 5 (which therefore could not be marketed as not in conformity to the existing selling specifications), the use of the additive enables to be superior to the same specifications, with a direct and remarkable profit.

In the examples hereinafter the following products are used:

Product 1:

40% alkylsuccinimide in aromatic solvent (solvesso 150)

Product 2:

20% alkylsuccinimide in aromatic solvent (solvesso 150)
Tert-butyl-catechol
Methyl-tert-butyl-xylenol
2,6 ditert-butyl-phenol

Example 1

In a Visbreaking plant, a bitumen exhibiting rather unsatisfactory features is produced. The bitumen samples, taken on two consecutive days (24/05 and 25/05), exhibit markedly negative aging parameters. On the same day 25/05, upon sampling of the second bitumen, an addition of 100 ppm (calculated on the plant feed) of the additive (composition) subject matter of the present invention was initiated.

All of the samples taken on 05/24 and 05/26 are residues of the Visbreaking (VSB) plant, whereas the samples taken on 05/25 and 05/27 are fluxed with a heavy oil coming from another untreated thermal plant (Vacuum 1).

The acronyms PV (Peptization Value) and CV (Chimec Value) represent values directly related to the stability of the plant residue (according to the above illustrated meaning of 'stability') and indirectly related to the severity of management of the same plant (see Patent EP-321 426). The more severe the management of the plant the lower the PV, and the higher the CV.

The operating conditions and the results are referred in the following Table 1.

TABLE 1

| Type of crude oil charge: | VSB plant | |
|---|---|---|
| Arabian M. 85% | Flow rate in t/h | 112 |
| Arabian L. 10% | Furnace outside temperature (TUF) (°C) | 447.5 |
| Others 5% | PV | 1.2/1.3 |
| | CV | 12 |
| | **Vacuum 1 plant** | |
| | Furnace outlet temperature (TUF) (°C) | 330 |
| | Flow rate in t/h | 64 |
| | Bottom (t/h) Flux (T.T.) t/h | 54 5 (8%) |
| Product 1, Amount: 100 ppm | | |
| | | |

| | Blank 24/05/99 | Blank Flux 25/05/99 | Treated 26/05/99 | Treated flux 27/05/99 |
|---|---|---|---|---|
| Penetration (mm/10) | 63 | 116 | 85 | 118 |
| R&B °C | 50.3 | 43.9 | 49.6 | 44.8 |
| Viscosity 60°C cP | 240.000 | 68.000 | 138.000 | 60.000 |
| Viscosity 80°C cP | -- | -- | -- | -- |
| Viscosity | 248 | 163 | 230 | 150 |

(continued)

| | Blank 24/05/99 | Blank Flux 25/05/99 | Treated 26/05/99 | Treated flux 27/05/99 |
|---|---|---|---|---|
| 135°C cP | | | | |
| Post-RTFOT aging process | | | | |
| penetration (mm/10) | 26.0 | 49.0 | 43.0 | 54.0 |
| R&B °C | 66.6 | 59.3 | 62.0 | 55.4 |
| Viscosity 60°C cP | 8.230.000 | 1.770.000 | 2.600.000 | 710.000 |
| Viscosity 80°C cP | -- | -- | -- | -- |
| Viscosity 135°C cP | 712 | 390 | 540 | 326 |
| Aging Index 60°C | 34.3 | 26.0 | 18.8 | 11.8 |
| Aging Index 80°C | -- | -- | -- | -- |
| Aging Index 135°C | 2.9 | 2.4 | 2.3 | 2.2 |
| △ R&B °C | 16.3 | 15.4 | 12.4 | 10.6 |
| Residual Penetration% | 41.3 | 42.2 | 50.6 | 45.8 |

Improvement obtained

A.I. = 45/55%

R & B = 4/5 °C

Residual Penetration = 5/10%

In Table 1, in the comparison between the tests on bitumen samples obtained from residues without and with treatment with the Product 1 (additive), the decrease in the Aging Indexes and in the △ softenings and the post-RTFOT increase of the Residual Penetration demonstrate the effectiveness of the Product 1 at issue in improving the quality of the bitumen obtained.

EXAMPLE 2

Other Samples, in a different time period, are taken from the same plant.

The operating conditions and the results are referred in the following Table 2.

TABLE 2

| Type of Crude Oil Charge: | VSB Plant | |
|---|---|---|
| Arabian M. 32% - Arabian L. 12% | Flow rate in t/h | 105 |
| Arabian H. 9% - Iranian H. 32% | TUF (°C) | 447.5 |
| Kirkuk 12% - Arabian E.L. 2% | PV | 1.1 |
| | CV | 20 |
| | **Plant Vacuum 1** | |
| | TUF (°C) | 335 |
| | Flow rate in t/h | 50 |
| | Bottom (t/h) | 42 |
| | Flux(T.T.)t/h 9/10 (18/20%) | |

(continued)

| Type of Crude Oil Charge: | | VSB Plant | | |
|---|---|---|---|---|
| Product 1, amount: 130 ppm | | | | |
| | | | | |
| | Blank 15/10/99 | Blank 16/10/99 | Treated 16/10/99 | Treated 16/10/99 |
| Penetration (mm/10) | 75 | 85 | 100 | 115 |
| R&B °C | 47.2 | 45.4 | 44.5 | 93.2 |
| Viscosity 60°C cP | 138.000 | 96.000 | 75.000 | 65.000 |

Table 2 (continued)

| | | | | | |
|---|---|---|---|---|---|
| Viscosity 80°C | cP | 12.000 | 8.600 | 7.100 | 6.600 |
| Viscosity 135°C | cP | 215 | 180 | 160 | 155 |
| | | | | | |
| Post-RTFOT | | | | | |
| | | | | | |
| Penetration | (mm/10) | 30 | 35 | 44 | 48 |
| R&B | °C | 58.7 | 56.6 | 54.6 | 53.5 |
| Viscosity 60°C | cP | 1.380.000 | 950.000 | 615.000 | 550.000 |
| Viscosity 80°C | cP | 63.000 | 44.000 | 32.000 | 30.000 |
| Viscosity 135°C | cP | 465 | 370 | 315 | 310 |
| | | | | | |
| Aging Index 60°C | | 10 | 9.9 | 8.2 | 8.5 |
| Aging Index 80°C | | 5.3 | 5.1 | 4.5 | 4.5 |
| Aging Index 135°C | | 2.2 | 2.1 | 2.0 | 2.0 |
| A R&B | °C | 11.5 | 11.2 | 10.1 | 10.3 |
| Residual Penetration % | | 40.0 | 41.2 | 44.0 | 41.7 |

Improvement obtained

(comparison between the two bitumens having nearer penetration values)

A.I. = 17%

R & B = 1.1°C

R.P. = 2.8%

In this case, it was not possible to obtain four samples homogeneous in penetration: in fact, the penetration of the additioned post-RTFOT is much greater with respect to that of the blanks. The samples taken during the treatment are fluxed to a greater extent with the untreated thermal plant oil, whereby the additive effectiveness is decreased. However, all the parameters of interest (Aging index, residual penetration and $\Delta$ softening) are improved.

EXAMPLE 3

Other Samples, in a different time period, are taken from the same plant.

The operating conditions and the results ar referred in the following Table 3.

TABLE 3

| Type of Crude Oil Charge: | VBS Plant | |
|---|---|---|
| Kirkuk 71%-Iranian H. 10% | Flow rate in t/h | 109 |
| Arabian L.7%-Arabian EL. 9% | TUF (°C) | 442 |
| Sirtica 3% | PV | 1.3 |
| | CV | 15/20 |
| | **Plant Vacuum 1** | |

(continued)

| Type of Crude Oil Charge: | VBS Plant | |
|---|---|---|
| | TUF (°C) | |
| | Flow rate in t/h | |
| | Bottom (t/h) | |
| | Flux (T.T.) t/h | 0 |
| Product 1,amount:170/180 ppm | I | |
| | | |

| | | Blank 15/10/99 | Treated 16/10/99 |
|---|---|---|---|
| Penetration | (mm/10) | 65 | 65 |
| R&B | °C | 46.8 | 46.4 |
| Viscosity 60°C | cP | 139.000 | 128.000 |
| Viscosity 80°C | cP | 12.000 | 11.700 |
| Viscosity 135°C | cP | 230 | 23.5 |
| | | | |
| Post-RTFOT | | | |
| | | | |
| Penetration | (mm/10) | 30 | 30 |
| R&B | °C | 56.8 | 55.0 |
| Viscosity 60°C | cP | 950.000 | 605.000 |
| Viscosity 80°C | cP | 50.000 | 36.500 |
| Viscosity 135°C | cP | 460 | 400 |
| | | | |
| Aging Index 60°C | | 6.8 | 4.7 |
| Aging Index 80°C | | 4.2 | 3.1 |
| Aging Index 135°C | | 2.0 | 1.7 |
| Delta R&B °C | | 10.0 | 8,6 |
| Residual Penetration % | | 46.2 | 46.2 |

Improvement obtained
(comparison between the two bitumens having nearest penetration values)
A.I. = 31%
R & B = 1.1°C
R.P. = 0%

In this case, two samples exhibiting exactly the same initial penetration (65 mm/10) were obtained: the effect of the additive on the Aging Index and on the ∆ softening is still evident, whereas for the residual penetration it is less evident.

EXAMPLE 4

In this example the effectiveness of the additive is demonstrated carrying out a test over a lenghty time period. Samples of high-severity (low PV plant) as well as of low-severity bitumens (high PV plant, bitumen also called 'pro-modification') are tested. 'Pro-modification bitumen' is a technical term indicating a bitumen not produced for road uses, but to be subsequently 'modified' by polymer addition. This bitumen may be used, e.g., for sheaths or the like, and it usually is produced with a lesser severity with respect to that for road uses. Since an additioned bitumen produced for road uses is not comparable to a blank produced, instead, with a low severity, i.e., with a high PV, the samples were subdivided in various groups homogeneous with respect to the PV. Hence, in order to demonstrate the positive effect of the additive on the bitumen quality, the comparison was effected among bitumens having alike PVs.

In the following Tables 4 and 5, the sampling data are referred together, whereas the comment is provided on samples subdivided in groups having homogeneous PVs, and therefore comparable treatment severities.

In a Visbreaking plant, over a time period of about 1 month, the bitumens produced under various settings of the plant were sampled and analyzed. The results are referred in Table 4. Subsequently, a treatment with 200 ppm of Product 2 was initiated, and, over a time period of about two months, the bitumens produced therewith were sampled and analyzed. The results are referred in Table 5.

Of course, it is not possible to effect a mere averaging in order to highlight the effect of the additive, as the operating conditions of the plant and the residue stability parameter should anyhow be taken into account. Therefore, some remarks are made, comparing bitumens produced under similar plant situations or, having similar residue stability features determined by the Peptization Value PV.

# SAMPLES OF PV 1.1 - 1.2 - 1.3

By virtue of the treatment with the additive according to the invention, the Residual Penetration is increased of 2.7 points (from 41.4 to 44. 1) equal to a 6.5% improvement.

The Δ Softening is improved of 1.64 °C (from 11.24 to 9.6) equal to the 14.6%.

The A.I. is improved of 1.12 points (15.1%) and of 3.44 points (35.4%) when the A.I. value of 19 (of 26/07) is inserted.

Hereinafter, the comparison among individual PV values will be discussed:

Samples taken with PV=1.2:

The comparison at this PV value highlights a markedly evident effect inserting in the computation two blank samples (corresponding to a PV 1.2); 6 treated samples are taken:

    a) Residual Penetration is improved of 4.5 points (i.e., the 11.5%) (from 39 to 43.5)
    b) Softening: is improved of 3.18 °C (equal to the 24.8%) (from 12.5 to 9.4)
    c) A. I. : is improved of 7.7 points (i.e. the 55.6%) (from 13.8 5 to 6. 1)

In case of discarding the sample taken on 29/07, of an unaccountably high A.I., the following improvements can be observed:

    a) residual penetration 8.75%, b) Softening 14.5%, c) A.I. 29.9

Samples taken with PV=1.3:

(3 blank and 3 treated samples; treated sample No. 8 was discarded)

    a) residual penetration: is improved of 1.58 points i.e. of the 3.7% (from 43 to 44.6)
    b) Softening: is improved of 1.2 °C i.e. of the 11.5% (from 10.4 to 9.2)
    c) A. I. - is improved of 0.39 ponts, i.e., of the 5.7% (from 6.93 to 6.53)

For the samples taken at P >1.4 the following may be noted:

    a) Residual penetration is increased of 3.9 points (8.5% improvement), b) A.I. is improved of 0.39 points (equal to the 8%), c) no effect on the softening detected.

The Samples are presently classified according to the two main operative settings maintained in the VSB plant depending on the type of bitumen to be produced:

• Pro-modification bitumens: particularly bland conditions; almost exclusively pure crude oils (Arabian Light in particular) charged; very low soaker pressure (7 bar); PV >1.4
• Road bitumen: Visbreaking of high severity; no particular attention paid to charged crude oils (possibly, mixtures are disposed of)-, high soaker pressure; PV 1.1 or 1.2

Evidently, these two operative settings are markedly different therebetween, and the comparison between bitumens produced with the one or the other method could be less than typical. Accordingly, in order to effect significant comparisons, it is expedient to subdivide the blank samples into two groups (road and pro-modification) and to compare them with the corresponding additivated ones.

The blanks may be subdivided into two classes:

Samples 2,3,8,9,13 certainly in pro-modification setting Average P.R.: 44.4
Sample 7 certainly road setting average P.R.: 40.0

The additivated samples may be subdivided into 2 groups:

Samples 4,13 certainly in pro-modification setting average P.R.: 49.5
Samples 1,2,3,6,7,9,10,11,12 certainly in road setting average P.R.: 43.7

For the comparison to the mere road blank sample, the refinery has historical data defining the road bitumen having an average P.R. of about 41%.

Some samples, both blank and additivated ones were ignored in this latter assessment, due to uncertain operative setting of the plant or to PV values not corresponding to provisions in the setting of the operating conditions. In light of the obscure production conditions of the related bitumens, such data was discarded.

However, the improving effect of the additive is remarkably evident, for both operation modes of the plant.

## TABLE 4

Quality assay  July-September  2000  Untreated  samples (BLANKS)

| Sample | | 1 | 2 | 3 | 4 |
|---|---|---|---|---|---|
| Sampling day and hour | | 29/06 10,00 | 02/07 10,00 | 05/07 17,30 | 06/07 11,00 |

### BITUMEN TEL QUEL

| Penetration | dmm | 55 | 90 | 110 | 70 |
|---|---|---|---|---|---|
| Softening point | °C | 50.5 | 44.8 | 43.1 | 45.4 |
| Viscosity 60 °C | cP | 195000 | 127000 | 68000 | 107000 |
| Viscosity 80 °C | cP | 14400 | 12500 | 7200 | 10400 |
| Viscosity 135 °C | cP | 225 | 260 | 180 | 225 |

### POST-RTFOT BITUMEN

| Penetration | dmm | 21 | 41 | 45 | 32 |
|---|---|---|---|---|---|
| Softening point | °C | 64.5 | 54.1 | 53.1 | 54.5 |
| Viscosity 60 °C | cP | 370000 | 590000 | 320000 | 525000 |
| Viscosity 80 °C | cP | 123000 | 38000 | 22000 | 34000 |
| Viscosity 135 °C | cP | 565 | 450 | 306 | 390 |

### VARIATIONS

| residual penetration | % | 38 | 45 | 41 | 46 |
|---|---|---|---|---|---|
| Softening point increase | °C | 14 | 9.3 | 10 | 9.1 |
| Aging Index 60 °C | | 19 | 4.6 | 4.7 | 4.9 |
| Aging Index 80 °C | | 8.4 | 3.04 | 3.05 | 3.27 |
| Aging Index 135 °C | | 2.5 | 1.73 | 1.7 | 1.73 |
| Weight variation | % | -0.12 | -0.1 | 0.05 | 0.03 |

### VISBREAKING PROCESS OPERATING PARAMETERS

| VSB Plant charge | T/h | 118.5 | 84 | 92 | 98.3 |
|---|---|---|---|---|---|
| TUF VSB oven | °C | 418 | 415 | 417 | 418 |
| Soaker Pressure | kg/cm² | 10.3 | 8 | 8.4 | 10.5 |
| Relative severity VSB | | -32.76 | -28.9 | -28.6 | -28.5 |

11

| residual PV VSB | | 1.2 | > 1.4 | 1.3 | > 1.4 |
|---|---|---|---|---|---|
| Crude oil type | | TK 59 IR.H. | TK 55 AR.L. | TK 61 MIX | TK 61 MIX |

TABLE 4 (Continued)

| Sample | | 5 | 6 | 7 | 8 | 9 |
|---|---|---|---|---|---|---|
| Sampling date and hour | | 13/07 05,00 | 13/07 11,00 | 14/07 11,00 | 16/07 05,00 | 17/07 05,00 |

BITUMEN TEL QUEL

| Penetration | dmm | 52 | 75 | 65 | 65 | 80 |
|---|---|---|---|---|---|---|
| Softening point | °C | 49 | 47.7 | 47.3 | 46.7 | 44.7 |
| Viscosity 60 °C | cP | 175000 | 117000 | 148000 | 157000 | 117000 |
| Viscosity 80 °C | cP | 14800 | 10500 | 13100 | 14300 | 11500 |
| Viscosity 135 °C | cP | 255 | 215 | 245 | 275 | 250 |

POST-RTFOT BITUMEN

| Penetration | dmm | 25 | 30 | 26 | 29 | 35 |
|---|---|---|---|---|---|---|
| Softening point | °C | 59.7 | 58.2 | 58.3 | 56.5 | 54 |
| Viscosity 60 °C | cP | 1290000 | 1020000 | 1290000 | 910000 | 535000 |
| Viscosity 80 °C | cP | 63000 | 52000 | 54000 | 53000 | 35500 |
| Viscosity 135 °C | cP | 500 | 450 | 520 | 530 | 430 |

VARIATIONS

| Residual penetration | % | 48 | 40 | 40 | 45 | 44 |
|---|---|---|---|---|---|---|
| Softening point increase | °C | 10.7 | 10.5 | 11 | 9.8 | 9.3 |
| Aging Index 60 °C | | 7.4 | 8.7 | 8.7 | 5.8 | 4.6 |
| Aging Index 80 °C | | 4.26 | 4.95 | 4.88 | 3.71 | 3.09 |
| Aging Index 135 °C | | 1.96 | 2.09 | 2.12 | 1.93 | 1.72 |
| Weight variation | % | 0.01 | 0.01 | 0.04 | -0.02 | -0.01 |

VISBREAKING PROCESS OPERATING PARAMETERS

| Charge VSB Plant | T/h | 127 | | | 83 | 85.5 |
|---|---|---|---|---|---|---|
| TUF VSB oven | °C | 420 | | | 416 | 416 |
| Soaker pressure | kg/cm2 | 10.4 | | | 7 | 7 |
| Relative severity | | -32.6 | | | -27.2 | -27.8 |

| VSB | | | | | | |
|---|---|---|---|---|---|---|
| residual PV VSB | | 1.3 | 1.3 | 1.2 | >1.4 | >1.4 |
| Crude oil type | | TK 59 IR.H. | TK 59 IR.H. | TK 59 IR.H. | TK 55 AR.L. | TK 55 AR.L. |

TABLE 4 (Continued)

| Sample | | 10 | 11 | 12 | 13 |
|---|---|---|---|---|---|
| Sampling date and hour | | 17/07 18,00 | 18/07 15,00 | 19/07 17,15 | 06/10 |

BITUMEN TEL QUEL

| Penetration | dmm | 75 | 78 | 88 | 92 |
|---|---|---|---|---|---|
| Softening point | °C | 45.5 | 45.1 | 45.2 | 43.9 |
| Viscosity 60 °C | cP | 136000 | 90000 | 81000 | 104000 |
| Viscosity 80 °C | cP | 12900 | 8900 | 8100 | 10600 |
| Viscosity 135 °C | cP | 255 | 205 | 180 | 240 |

POST-RTFOT BITUMEN

| Penetration | dmm | 39 | 32 | 40 | 43 |
|---|---|---|---|---|---|
| Softening point | °C | 54.2 | 54.1 | 53.9 | 52.3 |
| Viscosity 60°C | cP | 585000 | 486000 | 397000 | 441000 |
| Viscosity 80°C | cP | 38000 | 31000 | 25500 | 31000 |
| Viscosity 135°C | cP | 440 | 365 | 325 | 405 |

VARIATIONS

| Residual penetration | % | 52 | 41 | 45 | 47 |
|---|---|---|---|---|---|
| Softening point increase | °C | 8.7 | 9 | 8.7 | 8.4 |
| Aging Index 60 °C | | 4.3 | 5.4 | 4.9 | 4.2 |

| Aging Index 80 °C | | 2.95 | 3.48 | 3.15 | 2.92 |
|---|---|---|---|---|---|
| Aging Index 135 °C | | 1.72 | 1.78 | 1.8 | 1.69 |

| Weight variation | % | -0.09 | -0.01 | -0.05 | -0.04 |
|---|---|---|---|---|---|

### VISBREAKING PROCESS OPERATING PARAMETERS

| | | | | | |
|---|---|---|---|---|---|
| VSB plant charge | T/h | | 89.5 | 91.5 | 94.1 |
| TUF VSB oven | °C | | 415 | 416 | 418.5 |
| Soaker pressure | kg/cm$^2$ | | 10.5 | 10.5 | 7.1 |
| Relative severity VSB | | | -30 | -29 | -27.4 |
| Residual PV VSB | | > 1.4 | > 1.4 | > 1.4 | > 1.4 |
| Crude oil type | | TK 55 AR.L. | TK 56 MIX | TK 56 MIX | TK 55 AR.L. |

### TABLE 5

Quality assay July-September 2000 - Samples additivated with CH R-708 (200 ppm)

| Sample | | 1 | 2 | 3 | 4 |
|---|---|---|---|---|---|
| Sampling date and hour | | 26/07 14,00 | 27/07 05,00 | 28/07 05,00 | 30/07 09,30 |

### BITUMEN TEL QUEL

| | | | | | |
|---|---|---|---|---|---|
| Penetration | dmm | 100 | 95 | 88 | 80 |
| Softening point | °C | 44.1 | 44.2 | 45.1 | 45.2 |
| Viscosity 60°C | cP | 72000 | 87000 | 94000 | 129000 |
| Viscosity 80°C | cP | 7400 | 8900 | 9300 | 12300 |
| Viscosity 135°C | cP | 180 | 200 | 205 | 255 |

### POST-RTFOT BITUMEN

| | | | | | |
|---|---|---|---|---|---|
| Penetration | dmm | 45 | 39 | 40 | 40 |
| Softening point | °C | 54.1 | 55.7 | 53.8 | 54.4 |
| Viscosity 60°C | cP | 375000 | 570000 | 445000 | 585000 |

| Viscosity 80°C | cP | 24000 | 33000 | 28500 | 37500 |
|---|---|---|---|---|---|
| Viscosity 135°C | cP | 310 | 365 | 350 | 435 |

### VARIATIONS

| Residual penetration | % | 45 | 41 | 45 | 50 |
|---|---|---|---|---|---|
| Softening point increase | °C | 10 | 11.5 | 8.7 | 9.2 |
| Aging Index 60°C | | 5.2 | 6.5 | 4.7 | 4.5 |
| Aging Index 80°C | | 3.24 | 3.71 | 3.06 | 3.05 |
| Aging Index 135°C | | 1.72 | 1.82 | 1.71 | 1.71 |
| Weight variation | % | 0.02 | 0.04 | 0.05 | -0.09 |

### VISBREAKING PROCESS OPERATING PARAMETERS

| VSB plant charge | T/h | 97 | 95.5 | 100.5 | 88.5 |
|---|---|---|---|---|---|
| VSB plant TUF | °C | 418 | 417.5 | 418 | 417 |
| Soaker pressure | kg/cm$^2$ | 10.5 | 10.5 | 10.5 | 7 |
| Relative severity VSB | | -28.4 | -28.8 | -29.11 | -27.6 |
| Residual PV VSB | | 1.2 | 1.2 | 1.2 | > 1.4 |
| Crude oil type | | TK 61 MIX | TK 61 MIX | TK 61 MIX | TK 55 AR.L. |

### TABLE 5 (Continued)

| Sample | | 5 | 6 | 7 | 8 | 9 |
|---|---|---|---|---|---|---|
| Sampling date and hour | | 05/08 12,00 | 06/08 05,00 | 07/08 05,00 | 11/08 10,30 | 10/09 05,00 |

## BITUMEN TEL QUEL

| Penetration | dmm | 88 | 78 | 85 | 50 | 75 |
|---|---|---|---|---|---|---|
| Softening point | °C | 48.7 | 49.8 | 44.6 | 50.4 | 46.5 |
| Viscosity 60°C | cP | 50000 | 68000 | 87000 | 231000 | 100000 |
| Viscosity 80°C | cP | 5700 | 7000 | 8600 | 18700 | 9800 |
| Viscosity 135°C | cP | 155 | 175 | 195 | 285 | 210 |

## POST-RTFOT BITUMEN

| Penetration | dmm | 38 | 34 | 35 | 25 | 33 |
|---|---|---|---|---|---|---|
| Softening point | °C | 58 | 57.6 | 55.1 | 61.4 | 55.7 |
| Viscosity 60°C | cP | 365000 | 462000 | 531000 | 2150000 | 630000 |
| Viscosity 80°C | cP | 22500 | 26500 | 30500 | 93000 | 37500 |
| Viscosity 135°C | cP | 290 | 315 | 355 | 615 | 410 |

## VARIATIONS

| Residual penetration | % | 43 | 44 | 41 | 50 | 44 |
|---|---|---|---|---|---|---|
| Softening point increase | °C | 9.3 | 7.8 | 10.5 | 11 | 9.2 |
| Aging Index 60°C | | 7.3 | 6.8 | 6.1 | 9.3 | 6.3 |
| Aging Index 80°C | | 3.95 | 3.78 | 3.55 | 4.97 | 3.83 |
| Aging Index 135°C | | 1.87 | 1.8 | 1.82 | 2.16 | 1.95 |
| Weight variation | % | -0.02 | -0.01 | 0.01 | 0.02 | -0.05 |

## VISBREAKING PROCESS OPERATING PARAMETERS

| VSB plant charge | T/h | | 94 | 97 | 117 | 75.5 |
|---|---|---|---|---|---|---|
| VSB plant TUF | °C | | 417 | 417 | 418.5 | 411 |
| Soaker pressure | kg/cm$^2$ | | 10 | 10 | 10.2 | 10.5 |
| Relative severity VSB | | | -28.5 | -29.2 | -31.8 | -31 |
| Residual PV VSB | | 1.2 | 1.2 | 1.1 | 1.3 | 1.3 |
| Crude oil type | | TK 61 MIX | TK 61 MIX | TK 61 MIX | TK 59 IR.H | TK 56 MIX |

TABLE 5 (Continued)

| Sample | | 10 | 11 | 12 | 13 |
|---|---|---|---|---|---|
| Sampling date and hour | | 11/09 05,00 | 12/09 05,00 | 15/09 05,00 | 14/10 |

BITUMEN TEL QUEL

| Penetration | dmm | 72 | 72 | 75 | 88 |
|---|---|---|---|---|---|
| Softening point | °C | 46.5 | 47.7 | 50 | 44 |
| Viscosity 60°C | cP | 110000 | 89000 | 80000 | 111000 |
| Viscosity 80°C | cP | 10500 | 8900 | 7500 | 11000 |
| Viscosity 135°C | cP | 220 | 200 | 185 | 240 |

POST-RTFOT BITUMEN

| Penetration | dmm | 31 | 31 | 35 | 43 |
|---|---|---|---|---|---|
| Softening point | °C | 55.5 | 56.9 | 59.4 | 52.4 |
| Viscosity 60°C | cP | 640000 | 560000 | 600000 | 493000 |
| Viscosity 80°C | cP | 38000 | 34000 | 30500 | 33000 |
| Viscosity 135°C | cP | 410 | 385 | 355 | 420 |

VARIATIONS

| Residual penetration | % | 43 | 43 | 47 | 49 |
|---|---|---|---|---|---|
| Softening point increase | °C | 9 | 9.2 | 9.4 | 8.4 |
| Aging Index 60°C | | 5.8 | 6.3 | 7.5 | 4.4 |
| Aging Index 80°C | | 3.62 | 3.82 | 4.07 | 3 |
| Aging Index 135°C | | 1.86 | 1.92 | 1.92 | 1.75 |

| Weight variation | % | -0.04 | -0.09 | -0.02 | -0.03 |
|---|---|---|---|---|---|

### VISBREAKING PROCESS OPERATING PARAMETERS

| VSB plant charge | T/h | 76 | 78 | 78.5 | 91.5 |
|---|---|---|---|---|---|
| VSB plant TUF | °C | 410.5 | 411 | 410 | 420 |
| Soaker pressure | kg/cm$^2$ | 10.5 | 10.5 | 10.5 | 7 |
| Relative severity VSB | | -31.6 | -31.7 | -32.82 | -25.2 |
| Residual PV VSB | | 1.3 | 1.2 | 1.3 | > 1.4 |
| Crude oil type | | TK 56 MIX | TK 56 MIX | TK 61 MIX | TK 55 AR.L. |

The improving effect of the additive is clearly evident with both operation modes of the plant.

EXAMPLE 5.

In another refinery plant in Italy a bitumen is produced starting from a visbreaking residue. Three samples were taken on days of June 21, 22 and 23 in order to evaluate the aging resistance performance of standard production bitumen.

Later on a treatment of the VSB feedstock was started using the anti-aging additive product of the present invention (Product 2 - 180 ppm dose) and further three samples were taken in the course of the product addition. The product addition was stopped and twelve hours later further bitumen made as additive-free was taken.

Table 6 shows the operation parameters of the plant during the test.

In this Table 6 a further standard parameter is reported usually employed to define the Visbreaking operating severity. This is the Martin-Bailey parameter (MB), which is an internal method of the above mentioned refinery (MA20-Rev.00) derived from the standard method BP230.

It in fact consists of establishing the amount of xylene required to perfectly stabilize the asphaltenes present in the residue. The asphaltenes stability is measured by letting a drop of residue dissolved in xylene/isooctane to spread on a filter paper sheet and observing whether the peculiar spot of undissolved asphaltenes is present or not. The result is reported as % added xylene. Of course, the larger will be this figure, (i.e. the percentage required for the asphaltenes stabilization) the lower the stability of the residue will be.

The MB and CV values are stable in accordance with the trend of TUF (outlet oven temperature) which in a Visbreaking operation drives the plant operating severity, the feed load being the same. In fact a standing severity of the Visbreaking reaction during the whole test time was substantially maintained.

The only data which is a little high is the one of June 24 at 15:00, in which both the MB and CV values indicate a higher VSB severity, so that the quality of the bitumen product should be slightly worst.

The penetration was measured on the taken samples and after adding a vacuum kerosene, in laboratory, the same samples have been brought to iso-penetration, that is as nearer as possible to the value 70 dmm.

In Table 6 (continuation) are reported the starting penetration values, the value after correction with kerosene and the value corresponding to Residual Penetration after aging by Rolling Thin Film Oven Test.

It is clearly shown that the values of residual penetration of the additivated samples are setting on about 46-47%, so gaining 4 to 5 points in comparison with the additive-free samples. Even the sample of time June 24, 15.00 produced at a higher severity, does not go far from the other's quality. The additive-free samples on the contrary show an R.P. from 42 to 43%, definitely below the minimum aging resistance threshold set in the CEN Standards.

The above shows that the anti-aging treatment is necessary for enabling the bitumens produced in a Visbreaking plant to obtain the minimum quality established in the CEN Standards.

TABLE 6

| Date and time of sampling | VSB Parameters | | | |
|---|---|---|---|---|
| | MB | 66 | | |
| 21 June at 20:00 - 1st additive-free | CV | 1331 | | |
| | Q | 3070 | T/g | |
| | TUF | 453 | °C | |
| | MB | 64 | | |
| 22 June at 8:00 - 2nd additive-free | CV | 1550 | | |
| | Q | 3070 | T/g | |
| | TUF | 453 | °C | |
| | MB | 66 | | |
| 23 June at 8:00 - 3rd additive-free | CV | 1050 | | |
| | Q | 3260 | T/g | |
| | TUF | 455 | °C | |
| | MB | 66 | | |
| 23 June at 20:00 - 1st product addition | CV | 990 | | |
| | Q | 3260 | T/g | |
| | TUF | 455 | °C | |
| | MB | 70 | | |
| 24 June at 15:00 - 2nd product addition | CV | 1857 | | |
| | Q | 3260 | T/g | |
| | TUF | 455 | °C | |
| | MB | 66 | | |
| 24 June at 20:00 - 3rd product addition | CV | 916 | | |
| | Q | 3264 | T/g | |
| | TUF | 455 | °C | |
| | MB | 68 | | |
| 25 June at 8:00 - 4th product addition | CV | 940 | | |
| | Q | 3250 | T/g | |
| | TUF | 455 | °C | |

MB = Martin Bailey
CV = Chimec Value
Q = Flow Rate Tons/day
TUF = Outlet VSB Oven Temperature

| Date and time of sampling | Start Penetration (dmm) | Corrected Penetration (Dmm) | Residual Penetration (%) |
|---|---|---|---|
| 21 June at 20:00 1st additive-free | 64 | 65 | 42 |
| 22 June at 8:00 2nd additive-free | 63 | 67 | 42 |
| 23 June at 8:00 3rd product addition | 68 | 68 | 43 |

(continued)

| Date and time of sampling | Start Penetration (dmm) | Corrected Penetration (Dmm) | Residual Penetration (%) |
|---|---|---|---|
| 23 June at 20:00 1st additive-free | 70 | 70 | 47 |
| 24 June at 14:00 2nd product addition | 60 | 64 | 46 |
| 24 June at 20:00 3rd product addition | 58 | 64 | 46 |
| 25 June at 8:00 4th product addition | 48 | 70 | 44 |

EXAMPLE 6.

A test of adding the anti-aging product of the present invention (Product 2) was carried out in a third refinery plant. The test was effected according to the following schedule.
Constant VSB operating setting (TUF 450° - PV 1.6-1.7)
Same feedstock (Russian topping residue - 4500 tons/day)
Blank sampling (18/6, time 9.00)
Additioning start (200 ppm Product 2)
Additioned sampling (19/6 time 4.00, 11.00, 18.00)
Bitumen analysis: penetration before and after RTFOT
Also in this case it is observed an improvement of the residual penetration by about 2-3 points %, which shows a higher aging resistance of the additivated bitumen.

TABLE 7

| Date and time of sampling | Penetration (dmm) | Penetration after RTFOT (dmm) | Residual Penetration (%) |
|---|---|---|---|
| 18 June at 9:00 1st product addition | 80 | 42 | 52.5 |
| 19 June at 4:00 1st product addition | 87 | 48 | 55.2 |
| 19 June at 11:00 2nd product addition | 89 | 48 | 53.9 |
| 19 June at 18:00 3rd product addition | 88 | 48 | 54.5 |

**Claims**

1. Process for obtaining a bitumen of improved aging resistance through vacuum distillation of the residue product of a petrochemical thermal cracking plant, **characterized by** the step of introducing in the hydrocarbon feedstock under treatment in said plant, an amount in the range from 10 to 10000 ppm calculated with respect to the weight of the hydrocarbon feedstock introduced in the plant, of an additive composition comprising:

   5 to 80% by weight of at least one alkylsuccinimide having a nitrogen content 1 to 8% and a total basicity value of 20 to 200 mg KOH/g and eventually containing atoms of an element selected from the class consisting of boron and phosphor,
0 to 90% by weight of phenol antioxidants and
solvents in a proportion from 5 to 95% by weight, sufficient to form a homogeneous end product,

*wherein the bitumen features expressing the improved aging resistance are the softening temperature, the penetration value, the viscosity or the weight.*

2. Process according to claim 1, wherein said additive composition comprises 20 to 50% by weight of said succinimides and 5 to 40% by weight of said phenols.

3. Process according to claim 1, wherein said composition comprises, by weight, 40% of said alkylsuccinimide and 60% of aromatic solvent.

4. Process according to any one of the preceding claims, wherein said alkylsuccinimides have a basicity value from 40 to 60 mg KOH/g and nitrogen content from 2.5 to 3.5% by weight.

5. Process according to any one of the preceding claims, wherein said phenols are sterically hindered phenols, cathecol derivatives and bisphenols.

6. Process according to claim 5, wherein said sterically hindered phenols have a tert-butyl substituent group lying in an ortho position with respect to the OH of the phenolic group.

7. Process according to claim 6, wherein said phenols are 2,6-di-tert-butylphenol, 2,6-di-tert-butyl-4-methylphenol and 2,4-dimethyl-6-tert-butylphenol.

8. Process according to claim 5, wherein said cathecol derivatives are 4-tert-butylcathecol and/or catechol.

9. Process according to claim 5, wherein said bisphenols are 4,4' methylene-bis(2,6-ditert-butylphenol), 4,4'-thiobis (6-tert-butyl methacresol), 2,2'-methylene-bis(4 methyl-6-nonylphenol), and 2,2'-methylene-bis(4-methyl-6-tert-butylphenol).

10. Process according to any one of the preceding claims, wherein said solvents are selected from the group comprising mixtures of xylenes, ethylbenzenes, trimethylbenzenes and diethylbenzenes, as well as aromatic hydrocarbon cuts of a boiling point range from 130 to 285 °C.

11. Process according to any one of the preceding claims, wherein said petrochemical plant is a Visbreaking plant.

12. Process according to any one of the preceding claims, wherein said additive composition is additioned to the hydrocarbon feedstock of said plant.

13. Process according to any one of the preceding claims, wherein said additive composition is additioned to the hydrocarbon flow treated in said plant, in any treatment point along the flow stream thereof.

14. Use of a composition comprising:

5 to 80% by weight of at least one alkylsuccinimide having a nitrogen content 1 to 8% and a total basicity value of 20 to 200 mg KOH/g and eventually containing atoms of an element selected from the class consisting of boron and phosphor,
0 to 90% by weight of phenol or amine antioxidants,
and solvents in a proportion from 5 to 95% by weight, sufficient to form a homogeneous end product,

as additive for a petrochemical thermal cracking plant, in an amount in the range from 10 to 10000 ppm calculated with respect to the weight of the hydrocarbon feedstock said plant, for improving the aging resistance of a bitumen obtained from the residue of said plant, with respect to a bitumen obtained in the absence of said additive, *wherein the bitumen features expressing the improved aging resistance are the softening temperature, the penetration value, the viscosity or the weight.*

**Patentansprüche**

1. Verfahren zur Herstellung von Bitumen mit verbesserter Alterungsbeständigkeit durch Vakuumdestillation des Rückstands aus einer Anlage zum thermischen Cracken von Petrochemikalien, **gekennzeichnet durch** den Schritt des Einbringens in das Kohlenwasserstoff-Einsatzmaterial, das in der Anlage behandelt wird, einer Menge im Bereich von 10 bis 10000 ppm, berechnet bezogen auf das Gewicht des in die Anlage eingebrachten Kohlenwasserstoff-Einsatzmaterials, einer Additivzusammensetzung, umfassend:

   5 bis 80 Gew.-% mindestens eines Alkylsuccinimids mit einem Stickstoffgehalt von 1 bis 8% und einer Gesamt-Basizitätszahl von 20 bis 200 mg KOH/g, welches gegebenenfalls Atome eines Elements enthält, das aus Bor und Phosphor ausgewählt ist,
   0 bis 90 Gew.-% Phenol-Antioxidantien und
   Lösungsmittel in einem Anteil von 5 bis 95 Gew.-%, welche ausreichen, um ein homogenes Endprodukt zu bilden;

   wobei die Merkmale des Bitumens, die die verbesserte Alterungsbeständigkeit zum Ausdruck bringen, der Erweichungspunkt, der Penetrationsindex, die Viskosität oder das Gewicht sind.

2. Verfahren nach Anspruch 1, wobei die Additivzusammensetzung 20 bis 50 Gew.-% an den Succinimiden und 5 bis 40 Gew.-% an den Phenolen umfasst.

3. Verfahren nach Anspruch 1, wobei die Zusammensetzung, bezogen auf das Gewicht, 40% des Alkylsuccinimids und 60% aromatisches Lösungsmittel umfasst.

4. Verfahren nach einem der vorhergehenden Ansprüche, wobei die Alkylsuccinimide eine Basizitätszahl von 40 bis 60 mg KOH/g und einen Stickstoffgehalt von 2,5 bis 3,5 Gew.-% aufweisen.

5. Verfahren nach einem der vorhergehenden Ansprüche, wobei die Phenole sterisch gehinderte Phenole, Katechin-Derivate und Bisphenole sind.

6. Verfahren nach Anspruch 5, wobei die sterisch gehinderten Phenole einen tert-Butyl-Substituentenrest aufweisen, der sich in ortho-Stellung zur OH-Gruppe des Phenolrests befindet.

7. Verfahren nach Anspruch 6, wobei die Phenole 2,6-Di-tert-butylphenol, 2,6-Di-tert-butyl-4-methylphenol und 2,4-Dimethyl-6-tert-butylphenol sind.

8. Verfahren nach Anspruch 5, wobei die Katechin-Derivate 4-tert-Butylkatechin und/oder Katechin sind.

9. Verfahren nach Anspruch 5, wobei die Bisphenole 4,4'-Methylen-bis(2,6-ditert-butylphenol), 4,4'-Thiobis(6-tert-butylmetakresol), 2,2'-Methylen-bis(4-methyl-6-nonylphenol) und 2,2'-Methylen-bis(4-methyl-6-tert-butylphenol) sind.

10. Verfahren nach einem der vorhergehenden Ansprüche, wobei die Lösungsmittel aus Gemischen von Xylolen, Ethylbenzolen, Trimethylbenzolen und Diethylbenzolen sowie aromatischen Kohlenwasserstofffraktionen mit einem Siedepunkt im Bereich von 130 bis 285°C ausgewählt sind.

11. Verfahren nach einem der vorhergehenden Ansprüche, wobei die Anlage für Petrochemikalien eine Anlage für Visbreaking ist.

12. Verfahren nach einem der vorhergehenden Ansprüche, wobei die Additivzusammensetzung dem Kohlenwasserstoff-Einsatzmaterial der Anlage zugesetzt wird.

13. Verfahren nach einem der vorhergehenden Ansprüche, wobei die Additivzusammensetzung dem in der Anlage behandelten Kohlenwasserstoffstrom zu jedem beliebigen Behandlungspunkt entlang dessen Strömungslinie zugesetzt wird.

14. Verwendung einer Zusammensetzung, umfassend:

   5 bis 80 Gew.-% mindestens eines Alkylsuccinimids mit einem Stickstoffgehalt von 1 bis 8% und einer Gesamt-Basizitätszahl von 20 bis 200 mg KOH/g, welches gegebenenfalls Atome eines Elements enthält, das aus Bor und Phosphor ausgewählt ist;

0 bis 90 Gew.-% Phenol- oder Amin-Antioxidantien;

und Lösungsmittel in einem Anteil von 5 bis 95 Gew.-%, welche ausreichen, um ein homogenes Endprodukt zu bilden;

als Additiv für eine Anlage zum thermischen Cracken von Petrochemikalien, in einer Menge im Bereich von 10 bis 10000 ppm, berechnet bezogen auf das Gewicht des Kohlenwasserstoff-Einsatzmaterials der Anlage, zur Verbesserung der Alterungsbeständigkeit von aus dem Rückstand der Anlage hergestelltem Bitumen, bezogen auf in Abwesenheit des Additivs hergestelltes Bitumen, wobei die Merkmale des Bitumens, die die verbesserte Alterungsbeständigkeit zum Ausdruck bringen, der Erweichungspunkt, der Penetrationsindex, die Viskosität oder das Gewicht sind.

## Revendications

1. Procédé de préparation d'un bitume ayant une résistance au vieillissement améliorée par la distillation sous vide du produit résiduel d'une installation pétrochimique de craquage thermique, **caractérisé par** l'étape d'introduction, dans le produit de départ hydrocarboné en cours de traitement dans ladite installation, d'une quantité dans la plage de 10 à 10000 ppm, calculée par rapport au poids du produit de départ hydrocarboné introduit dans l'installation, d'une composition d'additifs comprenant :

de 5 à 80 % en poids d'au moins un alkylsuccinimide ayant une teneur en azote de 1 à 8 % et une valeur de basicité totale de 20 à 200 mg de KOH/g et contenant éventuellement des atomes d'un élément choisi dans la classe consistant en du bore et du phosphore,
de 0 à 90 % en poids d'antioxydants phénoliques et
des solvants dans une proportion de 5 à 95 % en poids, suffisants pour former un produit final homogène,

dans lequel les caractéristiques du bitume exprimant la résistance au vieillissement améliorée sont la température de ramollissement, la valeur de pénétration, la viscosité ou le poids.

2. Procédé selon la revendication 1, dans lequel ladite composition d'additifs comprend de 20 à 50 % en poids desdits succinimides et de 5 à 40 % en poids desdits phénols.

3. Procédé selon la revendication 1, dans lequel ladite composition comprend, en poids, 40 % dudit alkylsuccinimide et 60 % de solvant aromatique.

4. Procédé selon l'une quelconque des revendications précédentes, dans lequel lesdits alkylsuccinimides ont une valeur de basicité de 40 à 60 mg de KOH/g et une teneur en azote de 2,5 à 3,5 % en poids.

5. Procédé selon l'une quelconque des revendications précédentes, dans lequel lesdits phénols sont des phénols stériquement encombrés, des dérivés du catéchol et des bisphénols.

6. Procédé selon la revendication 5, dans lequel lesdits phénols stériquement encombrés ont un groupe substituant tert-butyl se trouvant en position ortho par rapport au OH du groupe phénolique.

7. Procédé selon la revendication 6, dans lequel lesdits phénols sont le 2,6-di-tert-butylphénol, le 2,6-di-tert-butyl-4-méthylphénol et le 2,4-diméthyl-6-tert-butylphénol.

8. Procédé selon la revendication 5, dans lequel lesdits dérivés du catéchol sont le 4-tert-butylcathécol et/ou le catéchol.

9. Procédé selon la revendication 5, dans lequel lesdits bisphénols sont le 4,4' méthylène-bis(2,6-ditert-butylphénol), le 4,4'-thio-bis (6-tert-butyl méthacrésol), le 2,2'-méthylène-bis(4 méthyl-6-nonylphénol) et le 2,2'-méthylène-bis(4-méthyl-6-tert-butylphénol) .

10. Procédé selon l'une quelconque des revendications précédentes, dans lequel lesdits solvants sont choisis dans le groupe comprenant des mélanges de xylènes, d'éthylbenzènes, de triméthylbenzènes et de diéthylbenzènes, de même que des coupes d'hydrocarbures aromatiques dont le point d'ébullition est dans la plage de 130 à 285 °C.

**11.** Procédé selon l'une quelconque des revendications précédentes, dans lequel ladite installation pétrochimique est une installation de viscoréduction.

**12.** Procédé selon l'une quelconque des revendications précédentes, dans lequel ladite composition d'additifs est ajoutée au produit de départ hydrocarboné de ladite installation.

**13.** Procédé selon l'une quelconque des revendications précédentes, dans lequel ladite composition d'additifs est ajoutée à l'écoulement d'hydrocarbures traités dans ladite installation, au niveau d'un point de traitement quelconque le long du courant d'écoulement de celle-ci.

**14.** Utilisation d'une composition comprenant :

de 5 à 80 % en poids d'au moins un alkylsuccinimide ayant une teneur en azote de 1 à 8 % et une valeur de basicité totale de 20 à 200 mg de KOH/g et finalement contenant des atomes d'un élément choisi dans la classe consistant en du bore et du phosphore,
de 0 à 90 % en poids d'antioxydants phénoliques ou aminés,
et des solvants dans une proportion de 5 à 95 % en poids, suffisante pour former un produit final homogène,

en tant qu'additif pour une installation pétrochimique de craquage thermique, en une quantité dans la plage de 10 à 10000 ppm calculée par rapport au poids du produit de départ hydrocarboné de ladite installation, afin d'améliorer la résistance au vieillissement d'un bitume obtenu à partir du résidu de ladite installation, par rapport à un bitume obtenu en l'absence dudit additif, dans lequel les caractéristiques du bitume exprimant la résistance au vieillissement améliorée sont la température de ramollissement, la valeur de pénétration, la viscosité ou le poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2053800
- GB 960493 A
- GB 1186659 A
- US 3172892 A
- EP 321424 A
- EP 321426 A